# EUROPÄISCHE PATENTSCHRIFT

(11) **EP 3 692 559 B1**
(45) Veröffentlichungstag und Bekanntmachung des Hinweises auf die Patenterteilung: **22.11.2023**
(21) Anmeldenummer: 18782708.4
(22) Anmeldetag: 02.10.2018
(51) Int. Cl.: H01H 37/52, H01R 13/713, H01R 24/28, B60L 3/04

(54) **ELEKTRISCHER NETZSTECKER**
ELECTRIC POWER PLUG
FICHE D'ALIMENTATION ELECTRIQUE

(30) Priorität: 04.10.2017 DE 202017106035 U
(43) Veröffentlichungstag der Anmeldung: 12.08.2020
(73) Patentinhaber: TMC Sensortechnik GmbH, 75015 Bretten (DE)
(72) Erfinder: GENGENBACH, Bruno, 75181 Pforzheim (DE); BUCHER, Michael, 75181 Pforzheim (DE)
(74) Vertreter: Twelmeier Mommer & Partner
(86) Internationale Anmeldenummer: PCT/EP2018/076824
(87) Internationale Veröffentlichungsnummer: WO 2019/068725

(56) Entgegenhaltungen:
- DE-A1-102014 111 334
- DE-A1-102014 118 076
- DE-B3-102008 031 389
- GB-A- 2 308 510
- GB-A- 2 313 718
- US-A- 3 225 162
- US-A1- 2013 134 933
- US-A1- 2017 077 656

## Beschreibung

Die Erfindung betrifft einen Netzstecker mit den im Oberbegriff des Anspruchs 1 angegebenen Merkmalen. Ein solcher Netzstecker ist aus der GB 2 313 718 A und aus der US 2017/0077656 A1 bekannt. Der bekannte Netzstecker hat einen aus einem elektrisch isolierenden Material gebildeten Körper, in welchem zwei Kontaktstifte parallel zueinander angeordnet sind, welche zu einer ersten Seite des Körpers aus diesem herausragen und im Inneren des Körpers jeweils mit einem elektrischen Leiter verbunden sind, welcher an einer zweiten Seite des Körpers aus diesem herausführt ist, und in welchem als Sensor ein Thermobimetallschalter vorgesehen ist. Der Thermobimetallschalter ist bei dem bekannten Netzstecker an einem der Kontaktstifte so angeschlossen, dass der im Betrieb des Netzsteckers über den Kontaktstift fließende Strom auch durch den Thermobimetallschalter fließt.

Aus der DE 10 2015 206 840 A1 ist ein Netzstecker bekannt, welcher zu einer Ladevorrichtung zum Laden des Akkumulators eines Elektro- oder Hybridfahrzeugs an einem Wechselstromnetz gehört. Ein Ladekabel verbindet den Netzstecker mit einem Ladegerät. Zum Zweck eines Überhitzungsschutzes enthält der Netzstecker einen Sensor, der aus den zwei Kontaktstiften, die z. B. aus Eisen bestehen, und aus vier Drähten aus einem anderen Metall als Eisen gebildet ist, z. B. aus einer Kupfer-Nickel-Legierung. Je zwei dieser Kupfer-Nickel-Drähte sind mit zwei Punkten eines jeden Kontaktstifts verlötet, die in Längsrichtung des Kontaktstifts einen Abstand voneinander haben. An den voneinander beabstandeten Verbindungspunkten bildet sich auf Grund des Seebeck-Effektes eine elektrische Potentialdifferenz aus, die von der Temperaturdifferenz zwischen den beiden Verbindungspunkten abhängt. Auf diese Weise ist es möglich, einen Temperaturgradienten entlang eines jeden Kontaktstiftes festzustellen und dessen Größe zu messen. Ein solcher Netzstecker ist jedoch aufwändig in der Herstellung, belastet die Kupfer-Nickel-Drähte mit der vollen Netzspannung und erlaubt keine Messung der absoluten Temperatur im Netzstecker, sondern informiert nur darüber, ob ein Temperaturgefälle vorliegt oder nicht. Das erlaubt keine zuverlässige Temperaturüberwachung, denn eine zu hohe Temperatur kann auch dann vorliegen, wenn ein unauffälliges Temperaturgefälle vorliegt.

Aus der DE 10 2014 118 076 A1 ist ein konfektioniertes Ladekabel mit Temperaturüberwachung für Hybridelektrofahrzeuge (HEV) und ein Ladeverfahren bekannt, wobei die Temperaturen, die während eines elektrischen Aufladen eines HEV auftreten, überwacht und unter Kontrolle gehalten werden. Hierzu ist ein Netzstecker mit einem Gehäuse und einem Thermistor als Thermofühler offenbart.

Aus der DE 10 2014 111 334 A1 ist ferner ein gattungsfremder Netzstecker zum Laden von Elektrofahrzeugen bekannt, welcher thermisch an seine Kontaktstifte gekoppelte Temperatursensoren aufweist, welche als NTC-Elemente oder PTC-Elemente ausgeführt sind.

Der vorliegenden Erfindung liegt die Aufgabe zugrunde, einen Netzstecker mit einem Thermobimetallschalter zu schaffen, der es erlaubt, die Temperatur eines Kontaktstiftes des Netzsteckers zu überwachen und der eine andere Anordnung des Thermobimetallschalters als die bekannten Netzstecker aufweist.

Diese Aufgabe wird durch einen Netzstecker mit den im Patentanspruch 1 angegebenen Merkmalen gelöst. Vorteilhafte Weiterbildungen der Erfindung sind Gegenstand der Unteransprüche. Gegenstand des Anspruchs 12 ist ein elektrisches Kabel, an welchem ein erfindungsgemäßer Netzstecker angebracht ist. Gegenstand der Ansprüche 13 bis 15 ist ein elektrisches Gerät, welches den im Netzstecker vorgesehenen wenigstens einen Thermobimetallschalter überwacht und bei Überschreiten eines vorgegebenen Schwellenwertes der Temperatur die Stromaufnahme des elektrischen Gerätes begrenzt oder begrenzen kann. Das elektrische Gerät kann das Überschreiten des Schwellenwertes der Temperatur daran erkennen, dass wenigstens ein Thermobimetallschalter seine Schalttemperatur erreicht oder überschreitet und infolgedessen seine Schalterstellung von "offen" in "geschlossen" oder von "geschlossen" in "offen" ändert.

Die Erfindung hat wesentliche Vorteile:
- Der Einbau eines Thermobimetallschalters erlaubt eine zuverlässige Überwachung einer Temperatur im Netzstecker, welche ein Maß für die Temperatur eines Kontaktstiftes ist, wenn, wie vorgesehen, der Thermobimetallschalter dem Kontaktstift zugeordnet ist.
- Thermobimetallschalter sind sowohl in offener Bauweise als auch in einer geschlossenen Bauweise, d. h. mit einem von einem Gehäuse umgebenen Schaltwerk, in so kleinen Abmessungen erhältlich, dass sie ohne weiteres in einem handelsüblichen Netzstecker untergebracht werden können. Geeignete Thermobimetallschalter in geschlossener Bauweise sind z. B. in der DE 10 2008 031 389 B3 und in der DE 10 2004 036 117 B4 offenbart.
- Bei den möglichen geringen Abmessungen der Thermobimetallschalter kann jedem Kontaktstift ein eigener Thermobimetallschalter zugeordnet sein. Das erhöht die Überwachungssicherheit.
- Die Thermobimetallschalter werden nicht mit dem über den Kontaktstift fließenden Strom beaufschlagt.
- Thermobimetallschalter haben eine vorgegebene Schalttemperatur, die durch die Materialauswahl für das Thermobimetall und durch den mechanischen Aufbau des Schalters bestimmt ist und an den jeweiligen Anwendungsfall angepasst sein kann.
- Das Überschreiten oder Unterschreiten eines vorgegebenen Schwellenwertes der Temperatur kann einfach durch den Wechsel der Schaltstellung des Thermobimetallschalter von "offen" zu "geschlossen" oder von "geschlossen" zu "offen" festgestellt werden.
- Die Schaltstellung des Thermobimetallschalters kann z. B. dadurch festgestellt werden, dass eine elektrische Prüfspannung an die Anschlüsse des Thermobimetallschalters gelegt wird, die nur bei geschlossenem Schalter zu einem Stromfluss über den Thermobimetallschalter führt, der leicht gemessen werden kann. Die elektrische Prüfspannung kann z. B. von einem elektrischen Gerät kommen, welches durch den Netzstecker mit dem elektrischen Netz verbunden ist.
- Durch Prägen des Thermobimetallelements zu einer Schnappscheibe kann sichergestellt werden, dass sich die Krümmung des Thermobimetallelements beim Erreichen der Schalttemperatur schlagartig ändert, so dass die Schalttemperatur in engen Grenzen festgelegt werden kann.
- Der Thermobimetallschalter kann eine Kontaktfeder aus Kupfer oder aus einer Kupferlegierung haben, die durch eine an der Kontaktfeder gehaltene Thermobimetallschnappscheibe betätigt wird. Es ist aber auch möglich, die Kontaktfeder selbst aus einem Thermobimetall herzustellen, so dass ein gesondertes Thermobimetallelement zur Betätigung der Kontaktfeder nicht benötigt wird. Diese vereinfachte Ausführungsform des Thermobimetallschalters ist insbesondere deshalb möglich, weil der Netzstrom nicht über die Kontaktfeder des Thermobimetallschalters fließt.
- Thermobimetallschalter sind preiswert und zeichnen sich durch eine lange Lebensdauer aus.
- Thermobimetallschalter können vorgefertigt und in eine für sie vorgesehene Halterung im Netzstecker eingesetzt werden. Eine solche Halterung kann im Zuge der Herstellung des Netzsteckers, z. B. bei der Formung seines Gehäuses oder seiner inneren Strukturen, durch Spritzgießen ohne zusätzlichen Fertigungsaufwand gebildet werden.
- Mit dem erfindungsgemäßen Netzstecker kann nicht nur eine Überhitzung des Netzsteckers selbst festgestellt werden, sondern auch eine Überhitzung einer Steckdose, in welcher der Netzstecker steckt. Steckdosen sind in höherem Maße als Netzstecker vom Risiko einer Überhitzung betroffen, insbesondere durch Korrosion der Kontaktbuchsen in der Steckdose und dadurch erhöhte Kontaktübergangswiderstände, sowie durch eine mechanische Verformung der Kontaktbuchsen in der Steckdose. Der erfindungsgemäße Netzstecker eignet sich deshalb in besonderer Weise auch zur Verhinderung von Überhitzungen in einer Steckdose und beugt dadurch Folgeschäden, z. B. einem Brand, vor.

Wenn im Netzstecker nur ein einziger Thermobimetallschalter vorgesehen ist, kann dieser so angeordnet sein, dass er gleich gut auf die Temperatur beider Kontaktstifte anspricht. Zu diesem Zweck kann der Thermobimetallschalter parallel zu den beiden Kontaktstiften des Netzsteckers in der Mitte zwischen ihnen angeordnet sein. Alternativ kann der Thermobimetallschalter auch quer zu den beiden Kontaktstiften angeordnet sein. Es ist aber auch möglich, den einzigen Thermobimetallschalter näher bei dem einen als bei dem anderen Kontaktstift anzuordnen. Das würde zu einem schnelleren Ansprechen auf eine Übertemperatur des nächstliegenden Kontaktstifts führen.

Vorzugsweise sind im Netzstecker zwei Thermobimetallschalter vorgesehen, von denen jeder neben einem der beiden Kontaktstifte liegt. Das ermöglicht einen optimalen Wärmeübergang von den Kontaktstiften auf die Thermobimetallschalter, weil beide neben den Kontaktstiften angeordnet sein können, vorzugsweise einer unmittelbar neben dem einen Kontaktstift und einer unmittelbar neben dem anderen Kontaktstift. Außerdem können auf diese Weise auch zu hohe Temperaturen an nur einem der beiden Kontaktstifte zuverlässig festgestellt werden und es steigt die Überwachungssicherheit, da auch noch bei Ausfall eines Thermobimetallschalters eine Überwachung möglich ist.

Wenn zwei Thermobimetallschalter vorgesehen sind, ist es bevorzugt, dass sie beide zwischen den beiden Kontaktstiften des Netzsteckers angeordnet sind. Es ist aber auch möglich, beide Bimetallkontaktschalter quer zu den Kontaktstiften anzuordnen.

Im Netzstecker kann für jeden Thermobimetallschalter eine eigene Halterung ausgebildet sein. Das ist insbesondere dann möglich, wenn der Netzstecker ein Gehäuse hat, das aus zwei durch Spritzgießen hergestellten, sich ergänzenden Teilen aus Kunststoff besteht, die eine Struktur haben, um die Kontaktstifte festzulegen. Diese Struktur kann ohne einen zusätzlichen Arbeitsvorgang bereits durch den Spritzgießvorgang mit Halterungen für die Thermobimetallschalter ausgebildet werden, in welche die Thermobimetallschalter nur noch eingesetzt werden müssen, um eine vorbestimmte Position einzunehmen.

Die Erfindung eignet sich aber auch für Netzstecker, deren innen liegende Bestandteile mit dem Kunststoff des Körpers umspritzt sind, insbesondere unter Formung eines einstückigen Körpers.

Es sind Netzstecker bekannt, in deren Körper eine elektrisch isolierende Abdeckung vorgesehen ist, unter welcher jene Stellen der Kontaktstifte liegen, an welchen diese mit den aus der zweiten Seite des Körpers herausführenden elektrischen Leitern verbunden sind oder verbunden werden können. Die Abdeckung schirmt diese Stellen z. B. gegenüber einem Kunststoff ab, mit dem der Körper des Netzsteckers durch Umspritzen seiner innen liegenden Bestandteile geformt wird. Der oder die Thermobimetallschalter werden in einem solchen Fall vorteilhafterweise wenigstens teilweise unter der Abdeckung angeordnet.

Für jeden Thermobimetallschalter kann unter der Abdeckung eine eigene Halterung angeordnet sein. Vorzugsweise ist sie an der Abdeckung selbst ausgebildet. Da eine solche Abdeckung zweckmäßigerweise durch Spritzgießen aus Kunststoff hergestellt wird, kann die Abdeckung ohne zusätzlichen Aufwand durch entsprechende Formgebung ihrer Spritzgießform mit passenden Halterungen für die Thermobimetallschalter ausgebildet werden, in die die Thermobimetallschalter nur noch eingesetzt, insbesondere eingeschoben oder eingesteckt werden müssen.

Vorzugsweise ragen die Halterungen für die Thermobimetallschalter von der Oberseite der Abdeckung in den Raum unter der Abdeckung, das ist der Raum, in welchem sich die hinteren Enden der Kontaktstifte befinden, welche durch die Abdeckung abgeschirmt werden.

Zum Einschieben der Thermobimetallschalter in ihre jeweilige Halterung ist es vorteilhaft, dass die von der Oberseite der Abdeckung in den Raum unter der Abdeckung ragenden Halterungen oben, das heißt an der Oberseite der Abdeckung, offen sind. Die Thermobimetallschalter können dann wahlweise vor oder nach dem Anbringen der Abdeckung an einem für die Kontaktstifte vorzugsweise vorgesehenen Träger aus elektrisch isolierendem Material in ihre jeweilige Halterung gesteckt werden. Ein solcher Träger und seine Vorteile für eine rationelle Herstellung des Netzsteckers sind weiter unten beschrieben.

Vorzugsweise sind die Halterungen auf ihrer dem nächstliegenden Kontaktstift zugewandten Seite offen, um den Wärmeübergang vom Kontaktstift auf den Thermobimetallschalter zu erleichtern. Es werden Thermobimetallschalter eingesetzt, die ein Gehäuse haben, welches den nächstliegenden Kontaktstift nicht berührt, und welches aus Metall besteht, was den Vorteil hat, die Wärme gut zu leiten.

Wenn zwei Thermobimetallschalter im Netzstecker vorgesehen sind, dann sind diese vorzugsweise mit einer gemeinsamen Leiterplatte mechanisch und elektrisch verbunden. Die gemeinsame Leiterplatte und die beiden Thermobimetallschalter bilden dann ein Modul, welches die Fertigung des erfindungsgemäßen Netzsteckers erleichtert, weil das Modul z. B. vom Hersteller der Thermobimetallschalter vorgefertigt werden kann, so dass es vom Hersteller des Netzsteckers nur noch in die für die Thermobimetallschalter vorgesehenen Halterungen gesteckt werden muss. An der kleinen Leiterplatte können Anschlusspunkte für Signalleitungen vorgesehen sein, durch welche die Thermobimetallschalter mit einer externen Überwachungseinrichtung verbunden werden können. Die Anschlussdrähte der Thermobimetallschalter können aber auch durch Bohrungen in der Leiterplatte hindurchgesteckt, durch Löten gesichert und später mit den Signalleitungen verlötet werden.

Wenn zwei Thermobimetallschalter vorgesehen sind, dann können für diese insgesamt zwei, drei oder vier Signalleitungen vorgesehen sein. Mit zwei Signalleitungen kommt man aus, wenn die beiden Thermobimetallschalter in Reihe geschaltet und unter ihrer Schalttemperatur geschlossen sind. Mit vier Signalleitungen kann man die beiden Thermobimetallschalter unabhängig voneinander betreiben und die beiden Kontaktstifte unabhängig voneinander überwachen; das ist aber auch mit nur drei Signalleitungen möglich, wenn man von jedem Thermobimetallschalter einen Anschluss mit einer ihnen gemeinsamen Signalleitung verbindet.

Die Signalleitungen können gemeinsam mit den elektrischen Leitern, welche den Netzstrom führen, zu einem ummantelten Kabel zusammengefasst werden. Solche Kabel sind ebenso Stand der Technik wie die Thermobimetallschalter, die in dem erfindungsgemäßen Netzstecker zum Einsatz kommen können.

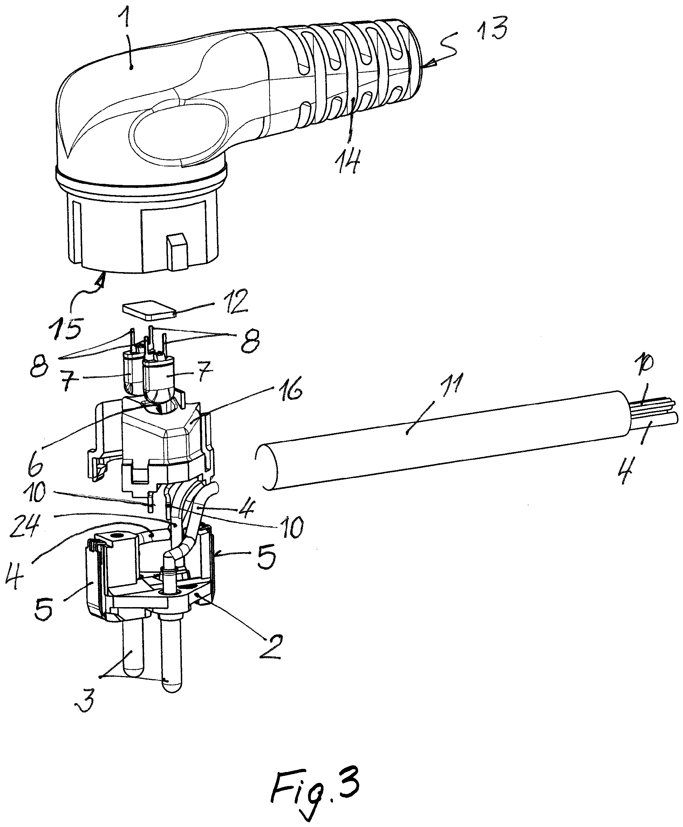

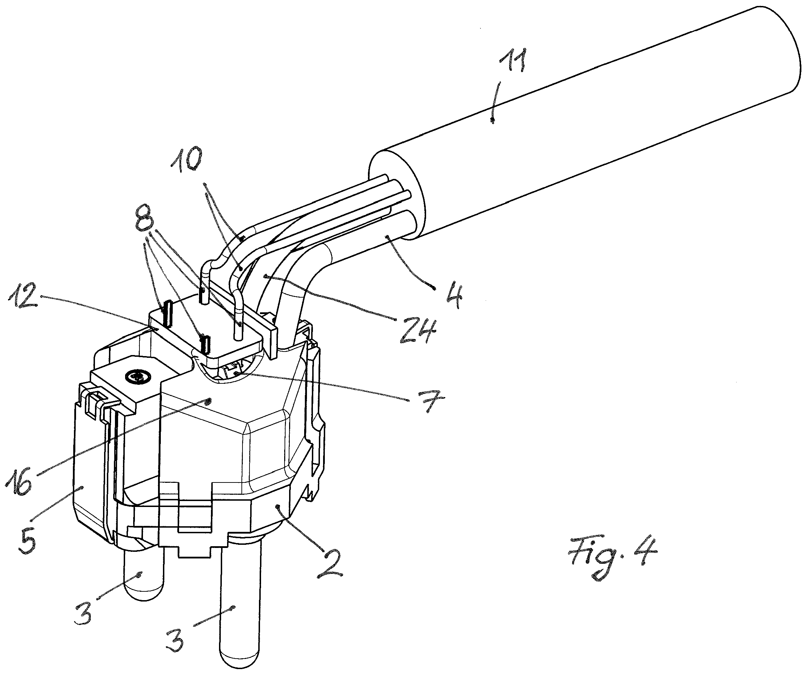

Insbesondere bei Netzsteckern, deren Körper einstückig durch Spritzgießen aus Kunststoff gebildet wird, ist es bekannt, für die Kontaktstifte einen gesonderten Träger aus elektrisch isolierendem Material vorzusehen. Ein solcher Träger wird von Steckerherstellern auch als "Brücke" bezeichnet. Der Träger kann durch Spritzgießen hergestellt sein. Es ist darüber hinaus bekannt, an einem solchen Träger eine Abdeckung zu befestigen, insbesondere aufzurasten, unter welcher die Anschlüsse der Kontaktstifte liegen. Dieser Träger und die auf ihm befestigte Abdeckung schirmen die darunterliegenden Steckerteile beim Spritzgießen des Körpers des Steckers ab. Der Träger, die daran angebrachten Kontaktstifte, das an diese angeschlossene Kabel und die Abdeckung können als Modul vorgefertigt und zum Formen des Steckerkörpers durch Umspritzen des Moduls mit einem Kunststoff oder zum Einsetzen in einen vorgefertigten Steckerkörper angeliefert werden. Dieses Modul kann auch die Thermobimetallschalter und eine sie verbindende Leiterplatte enthalten, an welcher die Enden der Signalleitungen angebracht sind. Halterungen für die Thermobimetallschalter können in diesem Modul entweder am Träger oder an der Abdeckung ausgebildet sein, welche auf dem Träger angebracht wird. Durch eine derartige Modularisierung kann der erfindungsgemäße Netzstecker mit einem oder zwei Thermobimetallschaltern rationell hergestellt werden. Anstatt die Enden der Signalleitung an einer die Thermobimetallschalter kontaktierenden Leiterplatte anzubringen, können sie auch unmittelbar an den elektrischen Anschlüssen der Thermobimetallschalter angebracht werden. Das hat den Vorteil, dass die Leiterplatte eingespart werden kann. Um das zu ermöglichen, ist es vorteilhaft, wenn die Thermobimetallschalter, wie in Figur 3 und Figur 4 dargestellt, Anschlussdrähte haben, die nach oben aus der Abdeckung herausragen.

Ein elektrisches Anschlusskabel, an welchem ein erfindungsgemäßer Netzstecker angebracht ist, kann mit seinen den Netzstrom führenden Leitern und mit den von den Thermobimetallschaltern kommenden Signalleitern direkt oder mittels eines Gerätesteckers an ein elektrisches Gerät angeschlossen werden, welches mit Strom aus dem Netz versorgt werden soll. Ein solches Gerät weist vorzugsweise eine elektrische Überwachungseinrichtung auf, welche überwacht, ob die Schaltstellung des oder der Thermobimetallschalter offen oder geschlossen ist. Zu diesem Zweck kann im elektrischen Gerät an die Signalleitungen eine Prüfspannung gelegt werden, die bei geschlossenem Thermobimetallschalter zu einem Stromfluss über den Thermobimetallschalter führt, bei offenem Thermobimetallschalter aber unterbrochen ist. Auf diese Weise kann die Überwachungseinrichtung in dem elektrischen Gerät die Stellung des Thermobimetallschalters erkennen und, wenn die erkannte Schaltstellung ein Überschreiten der Schalttemperatur des Thermobimetallschalters bedeutet, die Stromaufnahme des Geräts zeitweise verringern oder unterbrechen und damit einer Überhitzung vorbeugen oder entgegenwirken. Vorzugsweise wird in einem solchen Fall der Netzstrom nicht komplett unterbrochen, sondern stattdessen die Stromaufnahme des Gerätes auf einen Wert heruntergeregelt, bei welchem der Thermobimetallschalter seine Schalttemperatur unterschreitet. Zu diesem Zweck ist im elektrischen Gerät vorzugsweise ein Regler enthalten, der die entsprechende Regelung der Stromaufnahme durchführt.

Ausführungsbeispiele der Erfindung sind in den beigefügten Zeichnungen dargestellt.
- Fig. 1: zeigt ein erstes Ausführungsbeispiel des erfindungsgemäßen Netzsteckers in einer Explosionsdarstellung,
- Fig. 1a: zeigt eine Schrägansicht der Außenseite des Trägers aus Fig. 1,
- Fig. 2: zeigt den inneren Aufbau des Netzsteckers aus Fig. 1 in einer Schrägansicht,
- Fig. 3: zeigt ein zweites Ausführungsbeispiel des erfindungsgemäßen Netzsteckers in einer Explosionsdarstellung,
- Fig. 4: zeigt den inneren Aufbau des Netzsteckers aus Fig. 3 in einer Schrägansicht,
- Fig. 5: ist ein Blockschaltbild zur Erläuterung der prinzipiellen Vorgehensweise bei der Überwachung der Temperatur im Netzstecker und zum Sicherstellen, dass im Netzstecker und in der Steckdose, in welcher der Netzstecker steckt, keine Überhitzung auftritt, und
- Fig. 6: zeigt ein drittes Aufführungsbeispiel des erfindungsmäßigen Netzsteckers in einer Explosionsdarstellung.

Gleiche oder einander entsprechende Teile sind in den Ausführungsbeispielen mit übereinstimmenden Bezugszahlen bezeichnet.

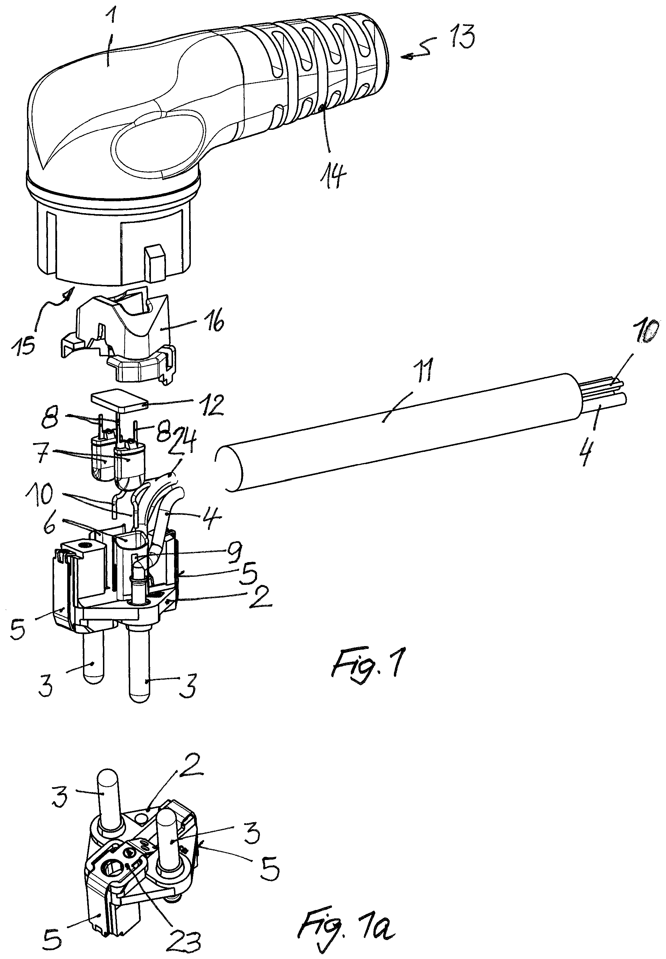

Der in Fig. 1 dargestellte Netzstecker ist vom Typ "Schukostecker" und hat einen Körper 1, der durch Spritzgießen aus Kunststoff hergestellt sein kann und dazu dient, die weiteren Bestandteile des Netzsteckers aufzunehmen. Bei diesen Bestandteilen handelt es sich um einen aus elektrisch isolierendem Kunststoff bestehenden Träger 2, in welchem zwei zueinander parallele Kontaktstifte 3 stecken, an deren rückwärtigem Ende jeweils ein den Netzstrom führender elektrischer Leiter 4 befestigt ist. Außerdem sind an dem Träger 2, wie bei einem Schukostecker üblich, zwei Schutzkontakte 5 angebracht, die mit einem Schutzleiter 24 verbunden sind. Auf der dem Inneren des Körpers 1 zugewandten Seite des Trägers 2 sind an diesem zwei Halterungen 6 ausgebildet, welche zwischen den Kontaktstiften 3 parallel zu diesen angeordnet sind. Sie dienen zum Aufnehmen je eines Thermobimetallschalters 7, dessen Schaltwerk in einem Gehäuse angeordnet ist, welches ein Tiefziehteil aus Blech sein kann. Aus dem Gehäuse des Thermobimetallschalters 7 führen je zwei Anschlussdrähte 8 heraus. Die Thermobimetallschalter 7 werden in die Halterungen 6 geschoben, wobei die Anschlussdrähte 8 nach oben (bezogen auf die Darstellung in Fig. 1) aus der Halterung 6 herausragen. Die Halterungen 6 sind so angeordnet, dass sie einen möglichst geringen Abstand von dem ihnen nächstliegenden Kontaktstift 3 haben, um einen möglichst guten Wärmeübergang von diesem auf den benachbarten Thermobimetallschalter 7 zu erzielen. Darüber hinaus kann zu diesem Zweck in der dem jeweils benachbarten Kontaktstift 3 zugewandten Wand der jeweiligen Halterung 6 eine Öffnung 9 vorgesehen sein.

Die insgesamt vier Anschlussdrähte 8 der beiden Thermobimetallschalter 7, sind mit vier elektrischen Signalleitungen 10 verbunden, von denen aus Gründen der Übersichtlichtkeit nur zwei Signalleitungen 10 dargestellt sind und welche zusammen mit den den Netzstrom führenden elektrischen Leitern 4 und mit dem Schutzleiter 24 zur Bildung eines gemeinsamen Kabels 11 zusammengefasst sind.

Zur Erleichterung der Montage und des Anschließens der Thermobimetallschalter 7 stecken deren Anschlussdrähte 8 in Bohrungen einer kleinen Leiterplatte 12 und sind mit Leiterbahnen auf dieser verlötet. Die Bohrungen in der Leiterplatte 12 und die Leiterbahnen auf der Leiterplatte sind in Figur 1 nicht dargestellt. Die beiden Thermobimetallschalter 7 und die Leiterplatte 12 bilden ein bequem zu handhabendes Modul, welches vorgefertigt werden und als Modul mit seinen Thermobimetallschaltern 7 in die Halterungen 6 geschoben werden kann. Danach können die Signalleitungen 10 mit den aus der Leiterplatte 12 hervorstehenden Anschlussdrähten 8 oder mit den auf der Leiterplatte 12 ausgebildeten Leiterbahnen, die zu den Anschlussdrähten 8 führen, verlötet werden, die Leiter 4 können mit den Kontaktstiften 3 verbunden und der Schutzleiter 24 mit den Schutzkontakten 5 verbunden werden.

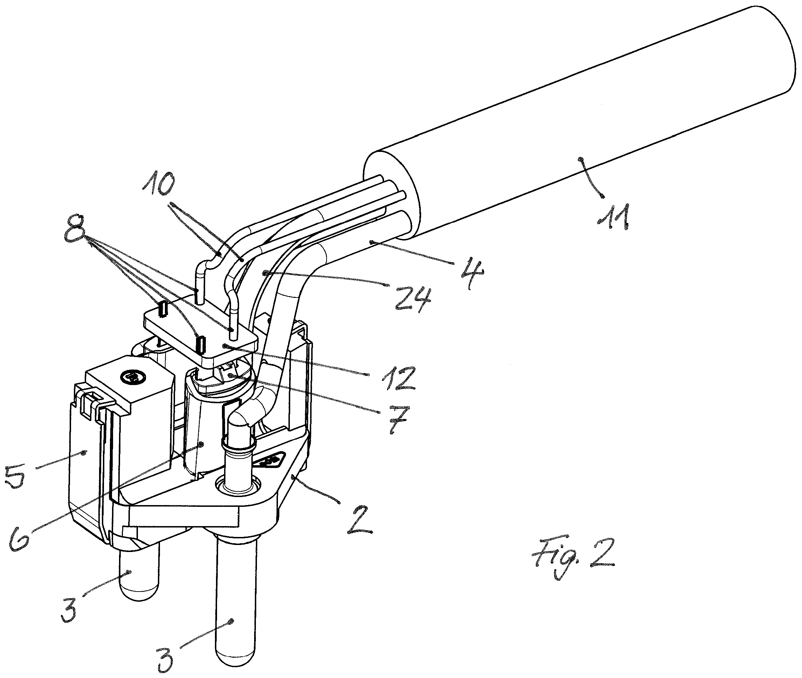

Nach dem Anschließen des Kabels 11 an die Kontaktstifte 3, an die Schutzkontakte 5 und an die Thermobimetallschalter 7 liegt eine halbfertige Baugruppe vor, die in Fig. 2 dargestellt ist. In Figur 2 ist die Lage der in Figur 1 wegelassenen Bohrungen dargestellt, durch welche die Anschlussdrähte 8 der Thermobimetallschalter 7 hindurchtreten. Die halbfertige Baugruppe wird durch eine Abdeckung 16 vervollständigt, welche auf den Träger 2 gesteckt und durch Verrasten auf ihm befestigt wird, siehe Fig. 1. Die Baugruppe, bestehend aus dem Träger 2 und den daran angebrachten weiteren Bestandteilen des Netzsteckers einschließlich der Thermobimetallschalter 7, der Leiterplatte 12, der Abdeckung 16 sowie aus einem Endabschnitt des daran angeschlossenen Kabels 11 kann zur Bildung des Körpers 1 mit einem Kunststoff umspritzt werden. In dem dadurch gebildeten Netzstecker umschließt der Körper 1 die Baugruppe. Aus einer ersten, vorderen Seite 13 des Körpers 1 treten die Kontaktstifte 3 und die Schutzkontakte aus dem Körper 1 hervor. An einer zweiten, hinteren Seite 13 des Körpers 1 ist eine Tülle 14 ausgebildet, aus welcher das Kabel 11 herausführt.

Fig. 1a zeigt eine abgewandelte Ausführungsform des Trägers 2 mit den daran befestigten Kontaktstiften 3 und Schutzkontakten 5. Letztere sind in diesem Fall auf der am Netzstecker nach außen weisenden Seite durch eine leitende Brücke 23 miteinander verbunden.

Das in den Figuren 3 und 4 dargestellte Ausführungsbeispiel unterscheidet sich von dem in den Figuren 1 und 2 dargestelltem Ausführungsbeispiel darin, dass die Halterungen 6 für die Thermobimetallschalter 7 nicht am Träger 2, sondern an der Abdeckung 16 ausgebildet sind. Die Thermobimetallschalter 7 werden daher erst zusammen mit der Abdeckung 16 am Träger 2 angebracht oder nach einem Aufrasten der Abdeckung 16 auf den Träger 2 in die Halterungen 6 geschoben. In diesem Fall liegt die Leiterplatte 12 auf der Abdeckung 16 und schließt diese nach oben ab. Die Halterungen 6 für die Thermobimetallschalter 7 ragen von der Oberseite der Abdeckung 16 in den Raum zwischen dem Träger 2 und der Abdeckung 16 hinein, wo sie sich wie im ersten Ausführungsbeispiel zwischen den beiden Kontaktstiften 3 möglichst dicht am jeweils nächstliegenden Kontaktstift 3 befinden.

Die Anschlussdrähte 8 der Thermobimetallschalter 7 ragen nach oben aus der Abdeckung 16 heraus und sind wie im ersten Ausführungsbeispiel mit einer Leiterplatte 12 verbunden, welche sich ebenfalls oberhalb der Abdeckung 16 befindet und vorzugsweise auf dieser liegt.

Die Baugruppe, bestehend aus dem Träger 2 mit den Kontaktstiften 3 und den Schutzkontakten 5 und der auf den Träger 2 aufgerasteten Abdeckung 16 mit den darin eingesetzten und durch eine Leiterplatte 12 verbundenen Thermobimetallschaltern 7 kann vorgefertigt, mit dem Kabel 11 verbunden und dann zur Bildung des Körpers 1 mit Kunststoff umspritzt werden. Das dem Netzstecker abgewandte Ende des Kabels 11 kann entweder direkt mit einem elektrischen Gerät verbunden oder mit einem Gerätestecker versehen werden.

In den Ausführungsbeispielen der Figuren 1, 2, 3 und 4 sind aus Gründen der Übersichtlichkeit nur zwei der vier Signalleitungen 10 für die beiden Thermobimetallschalter 7 dargestellt.

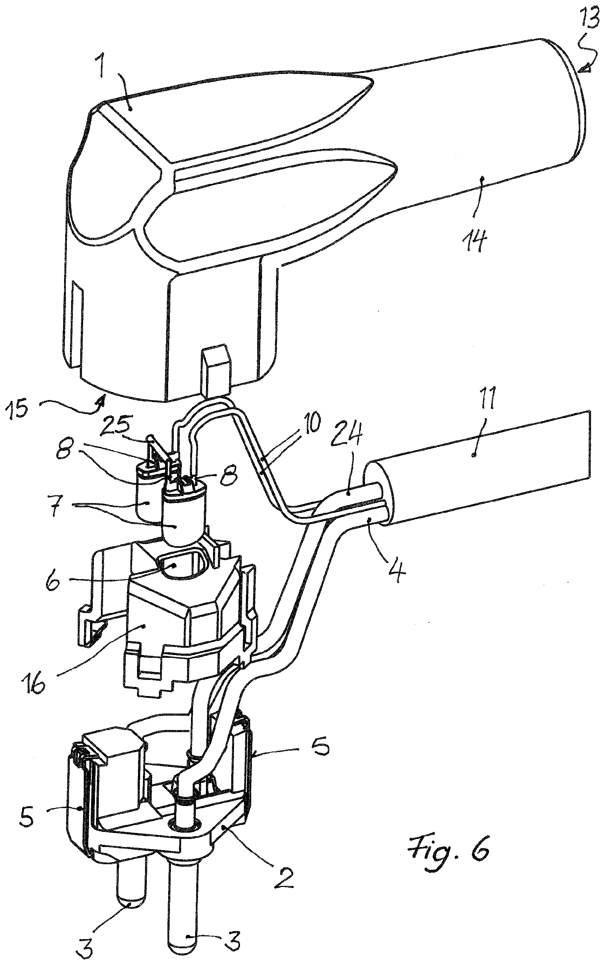

Das in Figur 6 dargestellte Ausführungsbeispiel unterscheidet sich von dem in den Figuren 3 und 4 dargestellten Ausführungsbeispiel darin, dass die Leiterplatte 12 entfallen ist. Anstelle von vier Signalleitungen sind nur noch zwei Signalleitungen 10 vorgesehen, von denen je eine mit einem Thermobimetallschalter 7 verbunden ist. Die beiden Thermobimetallschalter 7 sind durch einen metallischen Steg 25 elektrisch in Reihe miteinander verbunden. Daraus folgt, dass über die beiden Signalleitungen 10 ein Überschreiten der Schalttemperatur des einen

Thermobimetallschalters oder des anderen Thermobimetallschalters oder beider Thermobimetallschalter 7 gemeldet werden kann, z. B. dadurch, dass durch die Signalleitungen ein geringer Ruhestrom fließt, wenn die Thermobimetallschalter 7 unterhalb ihrer Schalttemperatur geschlossen sind, und dass sich bei Überschreiten der Schalttemperatur einer oder beide Thermobimetallschalter 7 öffnen und der Ruhestrom unterbrochen wird.

Die Baugruppe, die in den Körper 1 eingefügt bzw. zur Bildung des Körpers 1 mit Kunststoff umspritzt wird, lässt sich sehr rationell herstellen. Die Halterungen 6 für die Thermobimetallschalter 7 können ohne einen zusätzlichen Arbeitsgang beim Formen, insbesondere beim Spritzgießen der isolierenden Abdeckung 16 gebildet werden. Die Thermobimetallschalter 7 können wahlweise vor oder nach dem Verbinden der Abdeckung 16 mit dem Träger 2 in die Halterungen 6 eingefügt werden, sie können vor oder nach dem Einfügen in die Halterungen 6 durch den Steg 25 elektrisch leitend miteinander verbunden werden, sodass die Anordnung aus der Abdeckung 16 und den darin befindlichen, miteinander verbundenen Thermobimetallschaltern 7 als Modul vorgefertigt und eingesetzt werden kann. Schließlich können die in der Abdeckung 16 steckenden Thermobimetallschalter 7 wahlweise vor oder nach dem Anbringen der Abdeckung 16 an dem Träger 2 mit den Signalleitungen 10 verbunden werden.

Der erfindungsmäßige Aufbau des Netzsteckers lässt sich demnach flexibel mit unterschiedliche Montageverfahren zusammenbauen.

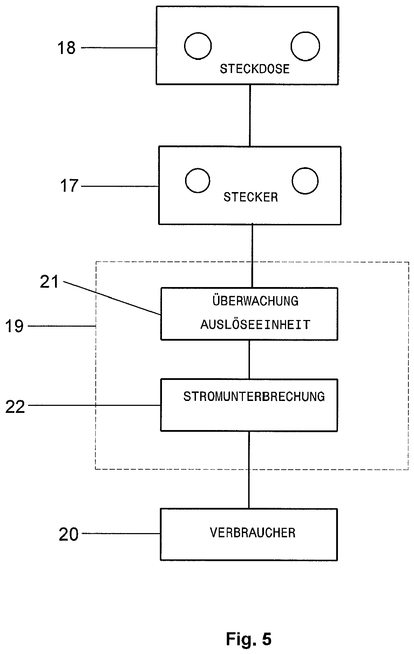

Eine Möglichkeit zur Überwachung der Temperatur im Netzstecker kann anhand des Blockschaltbildes in Fig. 5 erläutert werden. Fig. 5 zeigt schematisch den Netzstecker 17, der in einer Netzsteckdose 18 steckt. Vom Netzstecker führt das Kabel 11 zu einem elektrischen Gerät 19, welches der mit dem Netzstrom zu versorgende Verbraucher ist. Im dargestellten Beispiel ist es einem Verbraucher 20 vorgeschaltet. Das Gerät 19 enthält eine Überwachungseinrichtung 21, welche an die beiden Thermobimetallschalter 7 eine Prüfspannung anlegt. Angenommen, die Thermobimetallschalter 7 sind so ausgebildet, dass sie unterhalb ihrer Schalttemperatur offen und oberhalb der Schalttemperatur geschlossen sind, dann stellt die Überwachungseinrichtung keinen Stromfluss auf den Signalleitungen fest, solange die Thermobimetallschalter 7 offen sind, weil ihre Temperatur unter ihrer Schalttemperatur liegt. Steigt die Temperatur jedoch über ihre Schalttemperatur an, schließt wenigstens ein Thermobimetallschalter, was die Überwachungseinrichtung an dem jetzt auf den Signalleitungen fließenden Strom erkennt. Daraufhin steuert die Überwachungseinrichtung 21 z. B. ein Stromtor 22 an, welches den zum Verbraucher 20 fließenden elektrischen Strom verringert oder unterbricht, bis die Temperatur des oder der Thermobimetallschalter im Netzstecker 17 wieder unter ihre Schalttemperatur abgefallen ist. Vorzugsweise wird die Stromversorgung des Verbrauchers 20 nicht vollständig abgeschaltet, sondern heruntergeregelt, bis die Temperatur des oder der Thermobimetallschalter 7 wieder unter ihrer Schalttemperatur liegt. Das Stromtor 22 und die Überwachungseinrichtung 21 sind deshalb zu einem Regelkreis zusammengeschaltet.

### Bezugszeichenliste

- 1: Körper
- 2: Träger
- 3: Kontaktstifte
- 4: Leiter
- 5: Schutzkontakte
- 6: Halterungen
- 7: Thermobimetallschalter
- 8: Anschlussdrähte
- 9: Öffnung in 6
- 10: Signalleitungen
- 11: Kabel
- 12: Leiterplatte
- 13: erste Seite von 1
- 14: Tülle
- 15: zweite Seite von 1
- 16: Abdeckung
- 17: Netzstecker
- 18: Netzsteckdose
- 19: elektrisches Gerät
- 20: Verbraucher
- 21: Überwachungseinrichtung
- 22: Stromtor
- 23: Brücke
- 24: Schutzleiter
- 25: Steg

## Patentansprüche

1. Elektrischer Netzstecker mit einem aus einem elektrisch isolierenden Material gebildeten Körper (1),
in welchem zwei Kontaktstifte (3) parallel zueinander angeordnet sind, welche zu einer ersten Seite des Körpers (1) aus diesem herausragen und im Innern des Körpers (1) jeweils mit einem elektrischen Leiter (4) verbunden oder verbindbar sind, welcher an einer zweiten Seite des Körpers (1) aus diesem herausführt bzw. herausgeführt werden kann,
und in welchem ein Sensor vorgesehen ist,
wobei der Sensor ein Temperaturfühler, und zwar ein Thermobimetallelement ist, welches ein Bestandteil eines Thermobimetallschalters (7) ist, welcher wenigstens einem der beiden Kontaktstifte (3) zugeordnet ist,
**dadurch gekennzeichnet,**
**dass** der Thermobimetallschalter (7) ein metallisches Gehäuse für das Thermobimetallelement aufweist, welches den nächstliegenden Kontaktstift (3) nicht berührt.

2. Netzstecker nach Anspruch 1, **dadurch gekennzeichnet, dass** in dem Körper (1) zwei Thermobimetallschalter (7) vorgesehen sind.

3. Netzstecker nach Anspruch 2, **dadurch gekennzeichnet, dass** der eine der beiden Thermobimetallschalter (7) näher bei einem ersten der beiden Kontaktstifte (3) als bei einem zweiten der beiden Kontaktstifte (3) liegt, und dass der andere der beiden Thermobimetallschalter (7) näher bei dem zweiten als bei dem ersten Kontaktstift (3) liegt.

4. Netzstecker nach einem der vorstehenden Ansprüche, **dadurch gekennzeichnet, dass** der, insbesondere jeder der, Thermobimetallschalter (7) neben oder zwischen den Kontaktstiften (3) angeordnet ist.

5. Netzstecker nach einem der vorstehenden Ansprüche, **dadurch gekennzeichnet, dass** in seinem Körper (1) eine elektrisch isolierende Abdeckung (16) vorgesehen ist, unter welcher diejenigen Stellen der Kontaktstifte (3) liegen, an welchen diese mit den aus der zweiten Seite des Körpers (1) herausführenden elektrischen Leitern (4) verbunden sind oder verbunden werden können.

6. Netzstecker nach Anspruch 5, **dadurch gekennzeichnet, dass** für den, insbesondere für jeden der, Thermobimetallschalter (7) eine Halterung (6) an der Abdeckung (16) ausgebildet oder unter der Abdeckung (16) angeordnet ist.

7. Netzstecker nach nach Anspruch 6, **dadurch gekennzeichnet, dass** die Halterung (6) von der Oberseite der Abdeckung (16) in den Raum unter der Abdeckung (16) ragt.

8. Netzstecker nach Anspruch 7, **dadurch gekennzeichnet, dass** die Halterung (6) nach oben offen ist, sodass der, insbesondere jeder der, Thermobimetallschalter (7) von oben in den Raum unter der Abdeckung (16) geschoben werden kann.

9. Netzstecker nach einem der vorstehenden Ansprüche, **dadurch gekennzeichnet, dass** der, insbesondere jeder der, Thermobimetallschalter (7) Anschlussdrähte (8) hat, welche nach oben aus der Abdeckung (16) herausragen.

10. Netzstecker nach einem der vorstehenden Ansprüche, **dadurch gekennzeichnet, dass** die Kontaktstifte (3) an einem im Körper (1) angeordneten gesonderten Träger (2) aus elektrisch isolierendem Material befestigt sind, an welchem auch die Abdeckung (16) befestigt, insbesondere aufrastbar, ist.

11. Netzstecker nach Anspruch 10, **dadurch gekennzeichnet, dass** die Halterung (6), insbesondere jede der Halterungen (6), für die Thermobimetallschalter (7) an dem Träger (2) ausgebildet ist.

12. Elektrisches Anschlusskabel (11), an welchem ein Netzstecker gemäß einem der vorstehenden Ansprüche angebracht ist und in welchem außer den von den Kontaktstiften (3) kommenden elektrischen Leitern (4) und einem gegebenenfalls vorgesehenen Schutzleiter (24) noch Signalleitungen (10) verlaufen, welche mit dem bzw. den Thermobimetallschaltern (7) verbunden sind.

13. Elektrisches Gerät, welches ein Anschlusskabel (11) gemäß Anspruch 12 zum Anschließen des elektrischen Gerätes an ein elektrisches Stromnetz und eine elektrische Überwachungseinrichtung (21) aufweist, welche überwacht, ob der bzw. die Thermoschalter (7) offen oder geschlossen sind.

14. Elektrisches Gerät nach Anspruch 13, **dadurch gekennzeichnet, dass** die Überwachungseinrichtung (21) so ausgebildet ist, dass sie nach dem Erkennen einer Stellung eines Thermobimetallschalters (7), die durch ein Überschreiten seiner Schalttemperatur verursacht ist, die Stromaufnahme des Geräts (19, 20) zeitweise verringert oder unterbricht.

15. Elektrisches Gerät nach Anspruch 14, **dadurch gekennzeichnet, dass** es einen Regler enthält, welcher so ausgebildet ist, dass er nach dem Erkennen des Überschreitens der Schalttemperatur eines Thermobimetallschalters (7) durch die Überwachungseinrichtung (21) und dadurch ausgelöst die Stromaufnahme herunterregelt, bis sich keiner der Thermobimetallschalter (7) mehr in seiner Schaltstellung befindet, welche er durch Überschreiten seiner Schalttemperatur eingenommen hatte.

## Claims

1. An electrical mains plug with a body (1) formed of an electrically insulating material,
in which two contact pins (3) are arranged parallel to one another, which protrude out of the body (1) on a first side thereof and are connected or connectable in the interior of the body (1) in each case to an electrical conductor (4), which leads or can be led out of the body (1) on a second side thereof,
and in which a sensor is provided,
wherein the sensor is a temperature sensor, namely a thermal bimetallic element, which is a component of a thermal bimetallic switch (7) associated with at least one of the two contact pins (3),
**characterised in that** the thermal bimetallic switch (7) contains a metallic housing for the thermal bimetallic element which does not touch the nearest contact pin (3).

2. The mains plug according to claim 1, **characterised in that** two thermal bimetallic switches (7) are provided in the body (1).

3. The mains plug according to claim 2, **characterised in that** one of the two thermal bimetallic switches (7) is located closer to a first of the two contact pins (3) than to a second of the two contact pins (3), and **in that** the other of the two thermal bimetallic switches (7) is located closer to the second than to the first contact pin (3).

4. The mains plug according to one of the preceding claims, **characterised in that** said, in particular each, thermal bimetallic switch (7) is arranged next to or between the contact pins (3).

5. The mains plug according to one of the preceding claims, **characterised in that** an electrically insulating cover (16) is provided in its body (1), under which cover lie those points of the contact pins (3), at which these are connected or can be connected to the electrical conductors (4) leading out of the second side of the body (1).

6. The mains plug according to claim 5, **characterised in that** a mount (6) is formed on the cover (16) or arranged under the cover (16) for the, in particular for each, thermal bimetallic switch (7).

7. The mains plug according to claim 6, **characterised in that** the mount (6) projects from the top side of the cover (16) into the space under the cover (16).

8. The mains plug according to claim 7, **characterised in that** the mount (6) is open at the top so that said, in particular each, thermal bimetallic switch (7) can be pushed from above into the space under the cover (16).

9. The mains plug according to one of the preceding claims, **characterised in that** said, in particular each, thermal bimetallic switch (7) has connecting wires (8) which project upwardly out of the cover (16).

10. The mains plug according to one of the preceding claims, **characterised in that** the contact pins (3) are fastened to a separate carrier (2) of electrically insulating material arranged in the body (1), to which carrier the cover (16) is also fastened, in particular by being capable of being snapped on.

11. The mains plug according to claim 10, **characterised in that** the mount (6), in particular each of the mounts (6), for the thermal bimetallic switches (7) is formed on the carrier (2).

12. An electrical connection cable (11), to which a mains plug according to one of the preceding claims is attached and in which, in addition to the electrical conductors (4) coming from the contact pins (3) and a possibly provided protective conductor (24), signal lines (10) run, which are connected to the thermal bimetallic switch(es) (7).

13. An electrical device comprising a connection cable (11) according to claim 12 for connecting the electrical device to an electrical mains supply and an electrical monitoring device (21) which monitors whether the thermal switch(es) (7) is (are) open or closed.

14. An electrical device according to claim 13, **characterised in that** the monitoring device (21) is designed in such a way that it temporarily reduces or interrupts the current consumption of the device (19, 20) after detection of a position of a thermal bimetallic switch (7) caused by its switching temperature being exceeded.

15. An electrical device according to claim 14, **characterised in that** it contains a controller which is designed in such a way that, after detecting the exceedance of the switching temperature of a thermal bimetallic switch (7) by the monitoring device (21), thereby being triggered, it reduces the current consumption until none of the thermal bimetallic switches (7) is any longer in its switching position which it had assumed by exceeding its switching temperature.

## Revendications

1. Fiche d'alimentation électrique avec un corps (1) formé d'un matériau électriquement isolant,
dans lequel deux broches de contact (3) sont disposées parallèlement l'une à l'autre, font saillie sur un premier côté du corps (1) et sont connectées ou connectables à l'intérieur du corps (1) à un conducteur électrique (4), qui sort ou peut sortir du corps (1) sur un deuxième côté,
et dans lequel un capteur est prévu,
dans lequel le capteur est un capteur de température, à savoir un élément thermobimétallique, qui est un composant d'un interrupteur thermobimétallique (7) associé à au moins une des deux broches de contact (3),
**caractérisé en ce que** l'interrupteur thermobimétallique (7) contient un boîtier métallique pour l'élément thermobimétallique qui ne touche pas la broche de contact (3) la plus proche.

2. Fiche d'alimentation selon la revendication 1, **caractérisée en ce que** deux interrupteurs thermobimétalliques (7) sont prévus dans le corps (1).

3. Fiche d'alimentation selon la revendication 2, **caractérisée en ce que** l'un des deux interrupteurs thermobimétalliques (7) est situé plus près d'une première des deux broches de contact (3) que d'une deuxième des deux broches de contact (3), et **en ce que** l'autre des deux interrupteurs thermobimétalliques (7) est situé plus près de la deuxième que de la première broche de contact (3).

4. Fiche d'alimentation selon l'une des revendications précédentes, **caractérisée en ce que** ledit, en particulier chaque, interrupteur thermobimétallique (7) est disposé à côté des broches de contact (3) ou entre celles-ci.

5. Fiche d'alimentation selon l'une des revendications précédentes, **caractérisée en ce qu'**un couvercle électriquement isolant (16) est prévu dans son corps (1), sous lequel se trouvent les points des broches de contact (3), qui sont connectés ou peuvent être connectés aux conducteurs électriques (4) sortant du deuxième côté du corps (1).

6. Fiche d'alimentation selon la revendication 5, **caractérisée en ce qu'**un support (6) est formé sur le couvercle (16) ou disposé sous le couvercle (16) pour ledit, en particulier pour chacun, interrupteur thermobimétallique (7).

7. Fiche d'alimentation selon la revendication 6, **caractérisée en ce que** le support (6) fait saillie de la face supérieure du couvercle (16) dans l'espace situé sous le couvercle (16).

8. Fiche d'alimentation la revendication 7, **caractérisée en ce que** le support (6) est ouvert en haut de sorte que ledit, en particulier chaque, interrupteur thermobimétallique peut être poussé par le haut dans l'espace situé sous le couvercle (16).

9. Fiche d'alimentation selon l'une des revendications précédentes, **caractérisée en ce que** ledit, en particulier chaque, interrupteur thermobimétallique (7) a des fils de connexion (8) qui font saillie vers le haut à partir du couvercle (16).

10. Fiche d'alimentation selon l'une des revendications précédentes, **caractérisée en ce que** les broches de contact (3) sont fixées sur un porteur séparé (2) en matériau électriquement isolant disposé dans le corps (1), sur lequel le couvercle (16) est également fixé, en particulier par être adapté pour être encliqueté.

11. Fiche d'alimentation selon la revendication 10, **caractérisée en ce que** le support (6), en particulier chacun des supports (6), pour les interrupteurs thermobimétalliques (7) est formé sur le porteur (2).

12. Câble de raccordement électrique (11), auquel est fixée une fiche d'alimentation selon l'une des revendications précédentes et dans lequel, outre les conducteurs électriques (4) venant des broches de contact (3) et un conducteur de protection (24) éventuellement prévu, circulent également des lignes de signal (10) qui sont connectées au(x) interrupteur(s) thermobimétallique(s) (7).

13. Appareil électrique comprenant un câble de connexion (11) selon la revendication 12 pour connecter l'appareil électrique à un réseau électrique et un dispositif de surveillance électrique (21) qui contrôle si le(s) interrupteur(s) thermique(s) (7) est (sont) ouvert ou fermé.

14. Appareil électrique selon la revendication 13, **caractérisé en ce que** le dispositif de surveillance (21) est conçu de manière à réduire ou à interrompre temporairement la consommation de courant de l'appareil (19, 20) après détection d'une position d'un interrupteur thermobimétallique (7) causée par le dépassement de sa température de commutation.

15. Appareil électrique selon la revendication 14, **caractérisé en ce qu'**il contient un dispositif de commande qui est conçu de manière à ce que, après que le dispositif de surveillance (21) a détecté que la température de commutation d'un interrupteur thermobimétallique (7) a été dépassée et que cela l'a déclenché, il réduit la consommation de courant jusqu'à ce qu'aucun des interrupteurs thermobimétalliques (7) ne se trouve plus dans la position de commutation qu'il a prise en dépassant sa température de commutation.
